# EUROPEAN PATENT APPLICATION

(11) **EP 4 221 352 A1**
(43) Date of publication of application: **02.08.2023**
(21) Application number: 21914176.9
(22) Date of filing: 24.12.2021
(51) Int. Cl.: H04W 48/06

(54) **NETWORK CHANGE METHOD AND APPARATUS, AND TERMINAL**

(30) Priority: 29.12.2020 CN 202011608098
(71) Applicant: Vivo Mobile Communication Co., Ltd., Dongguan, Guangdong 523863 (CN)
(72) Inventor: HAN, Lufeng, Dongguan, Guangdong 523863 (CN); KANG, Yanchao, Dongguan, Guangdong 523863 (CN); WANG, Wen, Dongguan, Guangdong 523863 (CN); ZHANG, Pengfei, Dongguan, Guangdong 523863 (CN)
(74) Representative: Murgitroyd & Company
(86) International application number: PCT/CN2021/141062
(87) International publication number: WO 2022/143439

(57) **Abstract**

This application discloses a network-changing method and apparatus, and a terminal and pertains to the field of wireless communications technologies. The method is performed by a terminal and includes: determining that access to a second network is necessary, during reception of services from a first network; starting a first timer, where duration of the first timer is not totally the same for a plurality of terminals that need to access the second network; and attempting to access the second network upon expiration of the first timer.

## Description

### CROSS-REFERENCE TO RELATED APPLICATION

The present invention claims priority to Chinese Patent Application No. 202011608098.0, filed with the China National Intellectual Property Administration on December 29, 2020 and entitled "NETWORK-CHANGING METHOD AND APPARATUS, AND TERMINAL", which is incorporated herein by reference in its entirety.

### TECHNICAL FIELD

This application pertains to the field of wireless communications technologies, and specifically, relates to a network-changing method and apparatus, and a terminal.

### BACKGROUND

In the prior art, when a first network may not be able to provide normal services because of some disasters (disaster), terminals or user equipments (User Equipment, UE) in the first network attempt to access a second network.

After the first network recovers from the disaster, disaster inbound roamers (Disaster Inbound roamers) need to perform network re-selection, and the terminals accessing the second network due to the disaster in the first network attempt to access the first network. In other words, when disaster conditions are not applicable, all UEs (served by another PLMN currently and in a 5GS mobility management idle (5GS Mobility Management Idle, 5GMM-IDLE) mode) originally served by the public land mobile network (Public Land Mobile Network, PLMN) previously in a disaster state perform PLMN re-selection and return to the PLMN having undergone a disaster.

Therefore, in the prior art, when a large number of UEs of the first network simultaneously access the second network because of a disaster (disaster) occurring in the first network, the second network may become congested. Alternatively, after the first network recovers from a disaster which causes a large number of UEs in the first network to access the second network, the large number of UEs previously in the first network returning to the first network may cause congestion on the first network.

### SUMMARY

Embodiments of this application provide a network-changing method and apparatus, and an apparatus, which can resolve the problem that a second network becomes congested because a large number of UEs receiving services from a first network change to the second network.

According to a first aspect, a network-changing method is provided. The method is executed by a terminal and includes: determining that access to a second network is necessary, during reception of services from a first network; starting a first timer, where durations of the first timer are not completely the same for a plurality of terminals that need to access the second network; and attempting to access the second network upon expiration of the first timer.

According to a second aspect, a network-changing apparatus is provided. The apparatus includes: a determining module configured to: during reception of services from a first network, determine that access to a second network is necessary; a starting module configured to start a first timer, where duration of the first timer is not totally the same for a plurality of terminals that need to access the second network; and an access module configured to attempt to access the second network upon expiration of the first timer.

According to a third aspect, a terminal is provided, where the terminal includes a processor, a memory, and a program or instructions stored in the memory and executable on the processor, where when the program or instructions are executed by the processor, the steps of the method according to the first aspect are implemented.

According to a fourth aspect, a computer-readable storage medium is provided, where a program or instructions are stored in the computer-readable storage medium, and when the program or instructions are executed by a processor, the steps of the method according to the first aspect are implemented.

In the embodiments of this application, determination that access to a second network is necessary is made during reception of services from a first network; a first timer is started, where duration of the first timer is not totally the same for a plurality of terminals that need to access the second network; and attempt to access the second network is performed upon expiration of the first timer, preventing that a large number of target terminals simultaneously attempt to access the second network, thereby avoiding the problem of congestion on the second network.

### BRIEF DESCRIPTION OF DRAWINGS

FIG. 1 is a schematic diagram of a wireless communications system to which embodiments of this application are applicable;
FIG. 2 is a schematic flowchart of a network-changing method according to an embodiment of this application;
FIG. 3 is another schematic flowchart of a network-changing method according to an embodiment of this application;
FIG. 4 is still another schematic flowchart of a network-changing method according to an embodiment of this application;
FIG. 5 is a schematic structural diagram of a network-changing apparatus according to an embodiment of this application;
FIG. 6 is a schematic structural diagram of a communications device according to an embodiment of this application; and
FIG. 7 is a schematic diagram of a hardware structure of a terminal according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the data used in such a way is interchangeable in appropriate circumstances such that the embodiments of this application can be implemented in other orders than the order illustrated or described herein. Moreover, the objects distinguished by "first" and "second" are usually of one type, and the number of objects is not limited. For example, the first object may be one or more than one. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, but may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, 6th generation (6th Generation, 6G) communication systems.

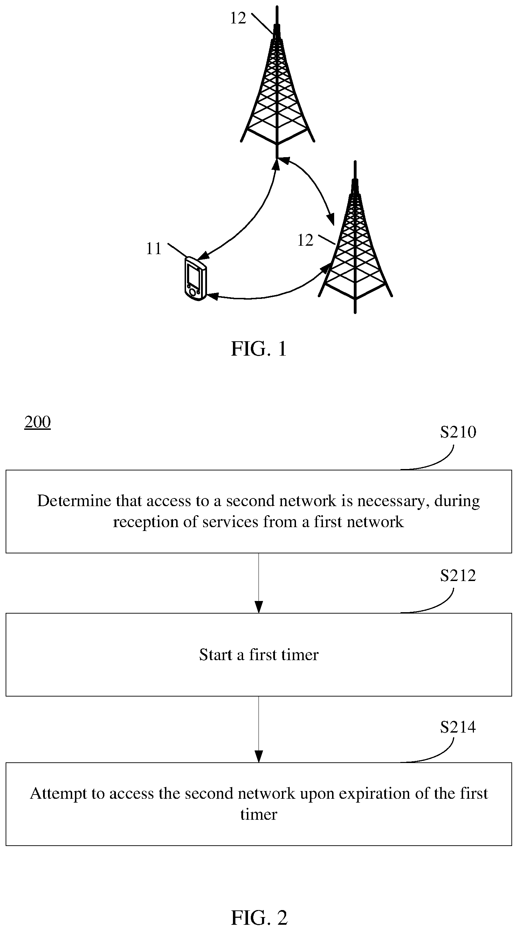

FIG. 1 is a schematic diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or vehicle user equipment (VUE), or pedestrian user equipment (PUE). The wearable device includes wrist bands, earphones, glasses, or the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission reception point (Transmitting Receiving Point, TRP), or another appropriate term in the art. Provided that the same technical effects are achieved, the base station is not limited to any specific technical term. It should be noted that the base station in the NR system is only used as an example in the embodiments of this application, and the base station is not limited to any specific type.

The following describes in detail a network-changing scheme provided in the embodiments of this application by using specific embodiments and application scenarios thereof with reference to the accompanying drawings.

FIG. 2 is a schematic flowchart of a network-changing method according to an embodiment of this application. The method 200 may be performed by a terminal. In other words, the method may be performed by software or hardware installed on the terminal device. As shown in FIG. 2, the method may include the following steps.

S210: Determine that access to a second network is necessary, during reception of services from a first network.

In an embodiment of this application, when the terminal normally served by the first network finds that the second network is available, the terminal determines that access to the second network is necessary.

In a possible implementation, the determining that access to a second network is necessary may include: finding that a disaster occurs in the first network and that the second network can provide services normally. For example, when the UE is in a connected state, a disaster occurs in the first network, such that the first network may be unable to provide normal services and sends a disaster notification to the UE, and the UE finds that the disaster occurs in the first network and that the second network can provide normal services. For example, a disaster occurs in some network elements in the first network, but other network elements are still available, and the network elements available can send a disaster notification to the UE.

In another possible implementation, the determining that access to a second network is necessary may include: finding that the second network recovers to normal, where the terminal receives services from the second network before a disaster occurs in the second network, and accesses the first network after the disaster occurs in the second network. For example, when the UE is connected to the second network, a disaster occurs in the second network, and then the UE attempts to access the first network. After the second network recovers to normal, the first network determines that the second network has recovered, and the UE originally served by the second network previously in a disaster state should perform network selection. In this case, the first network sends a recovery notification about the second network to the UE, and after receiving the notification, the UE originally served by the second network previously in a disaster state finds that the second network has recovered to normal.

S212: Start a first timer, where duration of the first timer is not totally the same for a plurality of terminals that need to access the second network.

In other words, in an embodiment of this application, the durations of the first timer corresponding to the plurality of terminals that need to access the second network are not completely the same. That is, each of the plurality of terminals corresponds to one first timer, and in the durations of the plurality of first timers, the durations of the first timers corresponding to some of the terminals are not the same; or in the durations of the plurality of first timers, the durations of the first timers corresponding to all of the terminals are different from each other.

S214: Attempt to access the second network upon expiration of the first timer.

In an embodiment of this application, the terminal attempts to access the second network after the first timer expires. The durations of the first timer corresponding to the plurality of terminals that need to access the second network are not completely the same, such that the plurality of terminals can access the second network at times that are not completely the same.

According to the network-changing method provided by the embodiment of this application, when the terminal has determined that change to the second network from the first network is necessary, the first timer is started, and upon expiration of the first timer, the terminal attempts to access the second network. Because durations of the first timer corresponding to the plurality of terminals that need to access the second network are not completely the same, such that the plurality of terminals can access the second network at times that are not completely the same, preventing a large number of UEs access the second network simultaneously, thereby resolving the problem of congestion on the second network.

In a possible implementation, the duration of the first timer can be determined by the terminal. In this possible implementation, before the starting a first timer, the method further includes: determining the duration of the first timer based on parameter information of the terminal.

In the above possible implementation, optionally, the parameter information may include at least one of the following: a random value within a predetermined range, identification information of the terminal, priority information of the terminal, subscription information of the terminal, location information of the terminal, and a service type of the terminal.

For example, the terminal can take a random value within a predetermined range as the duration of the first timer or calculate the duration based on a random value, ensuring that the plurality of terminals that need to access the second network attempt to access the second network at randomly distributed times, avoiding a large number of UEs accessing the second network simultaneously.

Alternatively, the terminal can calculate the duration of the first timer based on the identification information of the terminal, for example, a subscription permanent identifier (Subscription Permanent Identifier, SUPI), ensuring that different terminals access the second network at different times.

For another example, the terminal can further determine the duration of the first timer based on the priority information of the terminal. For example, a terminal having higher priority corresponds to a shorter duration of the first timer. For example, when a disaster occurs in the first network, the UE having lower priority can calculate a longer timer, resulting in it accessing the second network at a later time.

The priority information of the terminal may be priority information in the subscription information of the terminal or may be notified to the terminal by the network. This is not specifically limited in the embodiments of this application.

In another example, the terminal can further determine the duration of the first timer based on the service type of the terminal. For example, in a case that a service executed by the terminal has a higher priority, when a disaster occurs in the first network, the terminal can calculate a shorter timer, so as to guarantee the continuity of the service having a higher priority.

In another example, the terminal can further determine the duration of the first timer based on the location information of the terminal. For example, if the terminal is currently located at an edge position of coverage of the first network but at a center position of coverage of the second network, the terminal can calculate a shorter timer, so as to fast change to the second network.

Certainly, the terminal can determine the duration of the first timer based on the plurality of parameter information items. Details are not specifically described in the embodiments of this application again.

Alternatively, the duration of the first timer may alternatively be determined by a network side. For example, in a possible implementation, before the disaster occurs in the second network, the method further includes: receiving a signaling message sent by the second network, where the signaling message carries parameter information; and determining the duration of the first timer based on the parameter information. For example, the second network can inform the UE, via the signaling, about specific values of durations of the first timer for returning to the second network from other networks or provide necessary information for calculating durations of the first timer. The signaling may be a registration message, a deregistration message, a downlink (DownLink, DL) non-access stratum (Non Access Stratum, NAS) transmission message, or the like.

In another example, in another possible implementation, the duration of the first timer can be determined by the first network. Therefore, in this possible implementation, before the starting a first timer, the method further includes: receiving a signaling message sent by the first network, where the signaling message carries the parameter information; and determining the duration of the first timer based on the parameter information. For example, the first network can inform the UE, via the signaling, about specific values of durations of the first timers for returning to the second network, or provide necessary information for calculating durations of the first timer. The signaling may be a registration message, a deregistration message, a downlink (DownLink, DL) non-access stratum (Non Access Stratum, NAS) transmission message, or the like.

For example, the first network can determine the duration of the first timer based on an identifier of the first network, an identifier of the second network, and the subscription information of the terminal. For example, if the second network and the first network are equivalent networks, for determining the duration of the first timer by the first network, in the event of a disaster occurring in the first network, duration of the first timer corresponding to the terminal originally served by the first network is less than that of the terminal not served by the first network, to ensure that the terminal originally served by the first network preferentially changes to the second network. In another example, if the second network is a prohibited network of the UE, that is, when the UE attempting to access the second network is refused with the reason "PLMN not allowed", the UE can leave the first network to access the second network at a later time. Therefore, the first network determines a longer duration of the first timer of the UE, for example, longer than duration of a first timer of a terminal that is allowed to access the second network.

In a possible implementation, the duration of the first timer can be determined based on pre-configured parameter information. In this possible implementation, before the starting a first timer, the method further includes: determining the duration of the first timer based on the pre-configured parameter information.

Optionally, the pre-configured parameter information may be included in the subscription information of the terminal. For example, the subscription information of the terminal may include duration of a timer that allows the terminal to access another network when a disaster occurs in an original serving network of the terminal and/or duration of a timer that enables the terminal to return to its original serving network from another network.

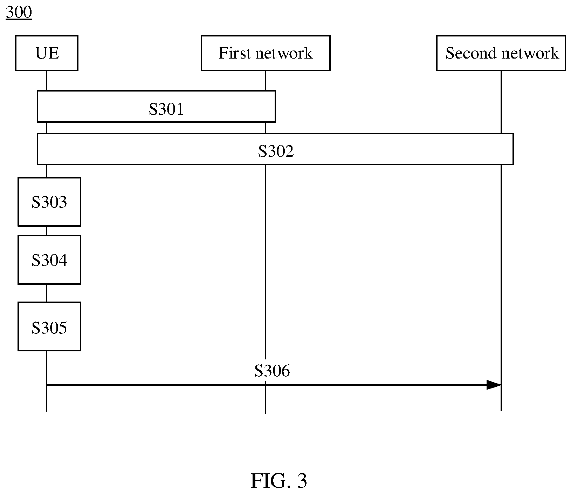

FIG. 3 is a schematic flowchart of a network-changing method according to an embodiment of this application. The method 300 can be performed by a terminal, a first network, and a second network. In other words, the method may be performed by software or hardware installed on the terminal or network-side devices of both the first network and the second network. As shown in FIG. 3, the method may include the following steps.

S301: The UE receives services from the first network.

S302: When a disaster occurs in the first network, the second network can provide services normally.

S303: The UE finds that a disaster occurs in the first network and that the second network can provide services normally.

For example, the first network can send a disaster notification to the UE when a disaster occurs, and the UE can determine that a disaster occurs in the first network according to the disaster notification.

S304: The UE starts a first timer.

The terminal can determine duration of the first timer according to the manners in the method 200. For example, the terminal can determine the duration of the first timer according to one of the following manners.
(1) The UE determines the duration of the first timer. For example, the UE can either take a random value in a specified range; or calculate the value based on identification information of the UE, for example, a subscription permanent identifier (Subscription Permanent Identifier, SUPI).
(2) The value of the first timer depends on information configured by the first network. For example, before S301, the first network can directly send the duration of the first timer or send information related to the calculation of the duration value of the first timer. The first network can inform the UE, via signaling, about the duration value of the first timer for changing to the second network from the first network or necessary information for calculating the duration of the first timer. The signaling may be a registration message, a deregistration message, a DL NAS transmission message, a configuration update message, or the like.
(3) The duration of the first timer may be pre-configured, for example, subscription information of the UE. For example, the subscription information of the first timer can be locally written into the UE of the first network when the UE of the first network subscribes to services with the network. For example, when a USIM card is issued, the subscription information can be written into the USIM by an operator, or be written into the memory of the terminal. In calculation of the duration of the first timer, the subscription information of the first timer stored locally in the UE is used. Therefore, before S301, the terminal can use the subscribed first timer information stored locally in the UE to determine the duration of the first timer.

S305: The first timer expires.

S306: The UE attempts to access the second network. For a specific access process, refer to a process of UE accessing a network in related arts. This is not specifically limited in the embodiments of this application.

According to the network-changing method provided in the embodiments of this application, when a disaster occurs in the first network, the UE starts the first timer, and upon expiration of the first timer, the UE attempts to access the second network. This prevents that a large number of UEs simultaneously access the second network when a disaster occurs in the first network, thereby avoiding the problem of congestion on the second network.

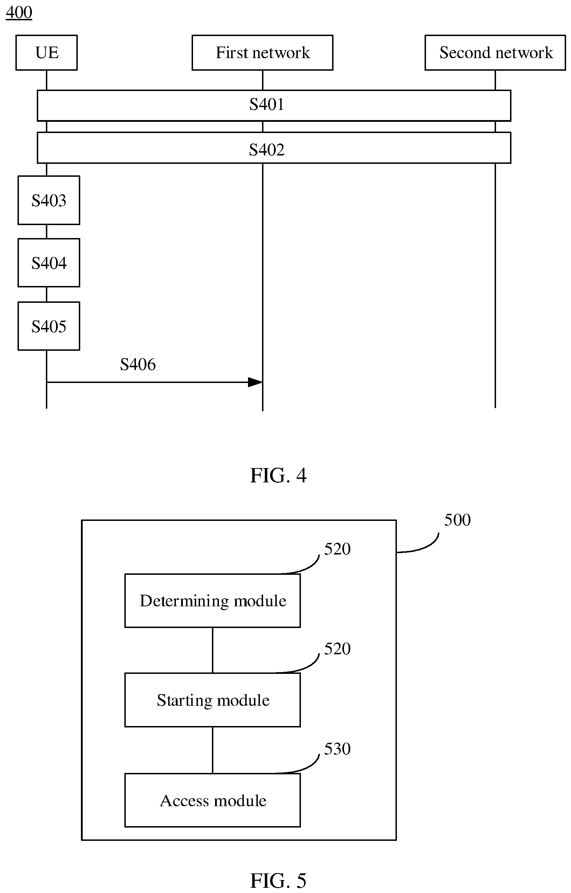

FIG. 4 is a schematic flowchart of a network-changing method according to an embodiment of this application. The method 400 can be performed by a terminal, a first network, and a second network. In other words, the method may be performed by software or hardware installed on the terminal or network-side devices of both the first network and the second network. As shown in FIG. 4, the method may include the following steps.

S401: The UE in the first network finds that a disaster occurs in the first network and selects to receive services from the second network.

In a specific application, the UE can access the second network by using the manners in the method 300. Certainly, this is not limited to thereof, and the UE can also access the second network by using other methods. This is not specifically limited in the embodiments of this application.

S402: The first network recovers to normal.

S403: The UE finds that the first network recovers to normal.

For example, the second network can send a notification message to the UE when finding that the first network recovers to normal, so that the UE finds that the first network has recovered to normal.

S404: The terminal starts the second timer.

The terminal can determine duration of the second timer according to the manners in the method 200. For example, the terminal can determine the duration of the second timer according to one of the following manners.
(1) The UE determines the duration of the second timer. For example, the UE can either take a random value in a specified range or calculate the duration value of the second timer based on identification information of the UE, for example, a subscription permanent identifier (Subscription Permanent Identifier, SUPI). For example, if an original serving network of the UE is the first network, the duration of the second timer may be shorter so that the UE can quickly return to the network to which the UE belongs.
(2) The value of the second timer depends on information configured by the first network. For example, before S401, that is, when the UE receives services from the first network, the first network can directly send the duration of the second timer or send the information related to the calculation of the duration value of the second timer. The first network can inform the UE, via signaling, about the duration value of the second timer for returning to the first network from another network or necessary information for calculating the duration of the second timer. The signaling may be a registration message, a deregistration message, a DL NAS transmission message, a configuration update message, or the like.
(3) The duration value of the second timer depends on information configured by the second network. For example, when finding that the first network has recovered to normal, the second network can inform the UE, via signaling, about the duration value of the second timer for returning to the first network or a manner for calculating the duration value. The signaling may be a registration message, a deregistration message, a DL NAS transmission message, or the like.
(4) The duration of the second timer may be pre-configured, for example, subscription information of the UE. For example, the subscribed second timer information can be locally written into the UE when the UE subscribes to services with the network. For example, when a USIM card is issued, the subscription information can be written into the USIM by an operator or be written into the memory of the terminal. When the duration of the second timer is calculated, the subscribed second timer information stored locally in the UE is used. Therefore, before S401, the terminal can use the subscribed second timer information stored locally in the UE to determine the duration of the second timer.

S405: The second timer expires.

S406: The UE attempts to access the first network. For a specific access process, refer to a process of UE accessing a network in related arts. This is not specifically limited in the embodiments of this application.

According to the network-changing method provided in the embodiment of this application, the UE accesses the second network after a disaster occurs in the first network; when the first network recovers to normal, the UE starts the second timer; and upon expiration of the second timer, the UE attempts to access the first network. This prevents that a large number of terminals simultaneously return to the first network from the second network after the first network recovers to normal, thereby avoiding the problem of congestion on the first network.

It should be noted that the network-changing method according to the embodiment of this application may be executed by a network-changing apparatus or a control module in the network-changing apparatus for executing the network-changing method. In an embodiment of this application, the network-changing method being executed by a network-changing apparatus is used as an example to describe the network-changing apparatus provided by the embodiment of this application.

FIG. 5 is a schematic structural diagram of a network-changing apparatus according to an embodiment of this application. As shown in FIG. 5, the network-changing apparatus 500 includes a determining module 510, a starting module 520, and an access module 530.

In an embodiment of this application, the determining module 510 is configured to: during reception of services from a first network, determine that access to a second network is necessary; the starting module 520 is configured to start a first timer, where duration of the first timer is not totally the same for a plurality of terminals that need to access the second network; and the access module 530 is configured to attempt to access the second network upon expiration of the first timer.

In a possible implementation, the determining module 510 determining that access to a second network is necessary may include: finding that a disaster occurs in the first network and that the second network can provide services normally.

In a possible implementation, the determining module 510 determining that access to a second network is necessary may include: finding that the second network recovers to normal, where the terminal receives services from the second network before a disaster occurs in the second network and accesses the first network after the disaster occurs in the second network.

In an implementation, the determining module 510 is further configured to: receive a signaling message sent by the second network, where the signaling message carries parameter information; and determine the duration of the first timer based on the parameter information.

In an implementation, the determining module 510 is further configured to: determine the duration of the first timer based on parameter information of the terminal.

Optionally, the parameter information may include at least one of the following: a random value within a predetermined range, identification information of the terminal, priority information of the terminal, subscription information of the terminal, location information of the terminal, and a service type of the terminal.

In an implementation, the determining module 510 is further configured to: receive a signaling message sent by the first network, where the signaling message carries parameter information; and determine the duration of the first timer based on the parameter information.

In an implementation, the determining module 510 is further configured to: determine the duration of the first timer based on pre-configured parameter information, where the parameter information is included in the subscription information of the terminal.

The network-changing apparatus in the embodiment of this application may be an apparatus or may be a component, an integrated circuit, or a chip in the terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The network-changing apparatus 500 in the embodiment of this application may be an apparatus having an operating system. The operating system may be an Android (Android) operating system, an iOS operating system, or other possible operating systems. This is not specifically limited in the embodiments of this application.

The network-changing apparatus according to an embodiment of this application is capable of implementing various processes that are implemented by the terminal in the method embodiments as shown in FIG. 1 to FIG. 4, with the same technical effects achieved. To avoid repetition, details are not described herein again.

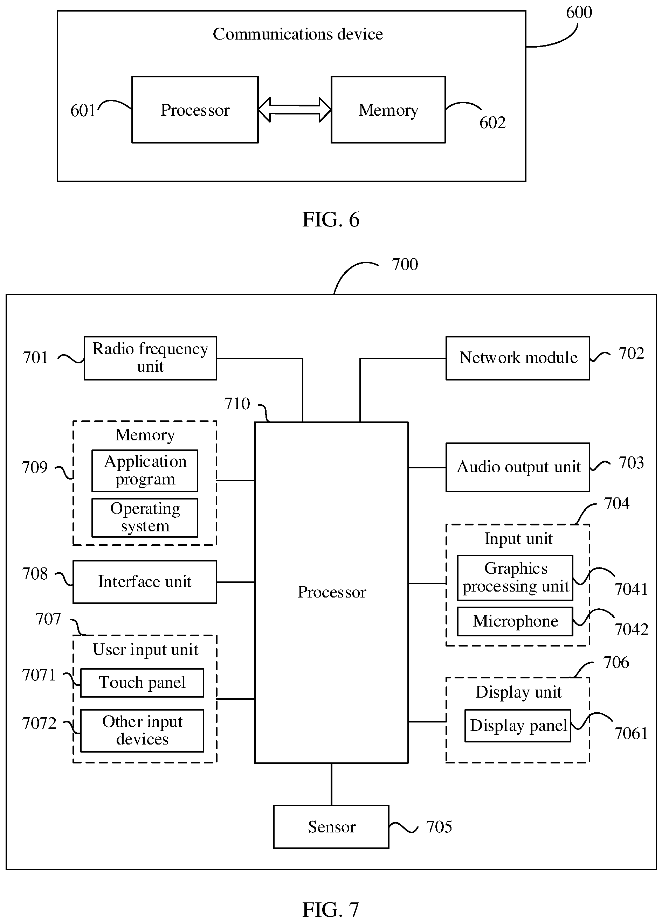

Optionally, as shown in FIG. 6, an embodiment of this application further provides a communications device 600, including a processor 601, a memory 602, and a program or instructions stored in the memory 602 and executable on the processor 601. For example, the communications device 600 is a terminal and when the program or instructions are executed by the processor 601, the processes of the foregoing embodiment of the network-changing method are implemented, with the same technical effects achieved. To avoid repetition, details are not described herein again.

FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) that supplies power to the components. The power supply may be logically connected to the processor 710 via a power management system. In this way, functions such as charge management, discharge management, and power consumption management are implemented via the power management system. The terminal structure shown in FIG. 7 does not constitute any limitation on the terminal. The terminal may include more or fewer components than shown in the figure, or combine some of the components, or have different arrangements of the components. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in an image capture mode or a video capture mode. The display unit 706 may include a display panel 7061, and the display panel 7061 may be configured in a form of a liquid crystal display, an organic light-emitting diode display, and the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but be not limited to a physical keyboard, a function key (such as a volume control key or an on/off key), a trackball, a mouse, and a joystick. Details are not described herein.

In an embodiment of this application, the radio frequency unit 701 sends downlink data received from a network-side device to the processor 710 for processing, and in addition, sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may mainly include a program or instruction storage region and a data storage region. The program or instruction storage region may store an operating system, an application program or instructions required by at least one function (for example, an audio play function or an image play function), and the like. In addition, the memory 709 may include a high-speed random access memory, and may also include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one disk storage device, flash memory device, or another volatile solid-state storage device.

The processor 710 may include one or more processing units. Optionally, the processor 710 may integrate an application processor and a modem processor. The application processor mainly processes an operating system, a user interface, application programs or instructions, or the like. The modem processor mainly processes wireless communication, for example, a baseband processor. It can be understood that the modem processor may be alternatively not integrated in the processor 710.

The processor 710 is configured to determine that access to a second network is necessary during reception of services from a first network; and start a first timer, where duration of the first timer is not totally the same for a plurality of terminals that need to access the second network.

The radio frequency unit 701 is configured to attempt to access the second network upon expiration of the first timer.

The terminal 700 according to this embodiment of this application can implement the processes of the foregoing network-changing method embodiments, with the same technical effects achieved. To avoid repetition, details are not described herein again.

An embodiment of this application further provides a readable storage medium. The readable storage medium stores a program or instructions. When the program or instructions are executed by a processor, each process of the foregoing network-changing method embodiment is implemented, with the same technical effect achieved. To avoid repetition, details are not described again herein described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to execute a program or instructions of a network-side device to implement the processes of the foregoing network-changing method embodiments, with the same technical effects achieved. To avoid repetition, details are not described herein again.

Furthermore, an embodiment of this application further provides a computer program product. The computer program product is stored in a non-transitory storage medium, and the computer program product is executed by a processor to implement each process of the foregoing network-changing method embodiment, with the same technical effect achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A network-changing method, performed by a terminal, wherein the method comprises:
determining that access to a second network is necessary, during reception of services from a first network;
starting a first timer, wherein duration of the first timer is not totally same for a plurality of terminals that need to access the second network; and
attempting to access the second network upon expiration of the first timer.

2. The method according to claim 1, wherein the determining that access to a second network is necessary comprises:
finding that a disaster occurs in the first network and that the second network is able to provide services normally.

3. The method according to claim 1, wherein the determining that access to a second network is necessary comprises:
finding that the second network recovers to normal, wherein the terminal receives services from the second network before a disaster occurs in the second network, and accesses the first network after the disaster occurs in the second network.

4. The method according to claim 3, wherein before the disaster occurs in the second network, the method further comprises:
receiving a signaling message sent by the second network, wherein the signaling message carries parameter information; and
determining the duration of the first timer based on the parameter information.

5. The method according to any one of claims 1 to 3, wherein before the starting a first timer, the method further comprises:
determining the duration of the first timer based on parameter information of the terminal.

6. The method according to claim 5, wherein the parameter information comprises at least one of the following: a random value within a predetermined range, identification information of the terminal, priority information of the terminal, subscription information of the terminal, location information of the terminal, and a service type of the terminal.

7. The method according to any one of claims 1 to 3, wherein before the starting a first timer, the method further comprises:
receiving a signaling message sent by the first network, wherein the signaling message carries parameter information; and
determining the duration of the first timer based on the parameter information.

8. The method according to any one of claims 1 to 3, wherein before the starting a first timer, the method further comprises:
determining the duration of the first timer based on pre-configured parameter information.

9. The method according to claim 8, wherein the parameter information is comprised in subscription information of the terminal.

10. A network-changing apparatus, comprising:
a determining module configured to: during reception of services from a first network, determine that access to a second network is necessary;
a starting module configured to start a first timer, wherein duration of the first timer is not totally same for a plurality of terminals that need to access the second network; and
an access module configured to attempt to access the second network upon expiration of the first timer.

11. The apparatus according to claim 10, wherein the determining module determining that access to a second network is necessary comprises: finding that a disaster occurs in the first network and that the second network is able to provide services normally.

12. The apparatus according to claim 10, wherein the determining module determining that access to a second network is necessary comprises: finding that the second network recovers to normal, wherein the terminal receives services from the second network before a disaster occurs in the second network, and accesses the first network after the disaster occurs in the second network.

13. The apparatus according to claim 12, wherein the determining module is further configured to:
receive a signaling message sent by the second network, wherein the signaling message carries parameter information; and
determine the duration of the first timer based on the parameter information.

14. The apparatus according to any one of claims 10 to 12, wherein the determining module is further configured to determine the duration of the first timer based on parameter information of the terminal.

15. The apparatus according to claim 14, wherein the parameter information comprises at least one of the following: a random value within a predetermined range, identification information of the terminal, priority information of the terminal, subscription information of the terminal, location information of the terminal, and a service type of the terminal.

16. The apparatus according to any one of claims 10 to 12, wherein the determining module is further configured to:
receive a signaling message sent by the first network, wherein the signaling message carries parameter information; and
determine the duration of the first timer based on the parameter information.

17. The apparatus according to any one of claims 10 to 12, wherein the determining module is further configured to determine the duration of the first timer based on pre-configured parameter information.

18. The apparatus according to claim 17, wherein the parameter information is comprised in subscription information of the terminal.

19. A terminal, comprising a processor, a memory, and a program or instructions stored in the memory and executable on the processor, wherein when the program or instructions are executed by the processor, the steps of the network-changing method according to any one of claims 1 to 9 are implemented.

20. A readable storage medium, wherein the readable storage medium stores a program or instructions, and when the program or instructions are executed by a processor, the network-changing method according to any one of claims 1 to 9 is implemented.

21. A chip, wherein the chip comprises a processor and a communication interface, the communication interface is coupled to the processor, and the processor is configured to execute a program or instructions of a network-side device to implement the network-changing method according to any one of claims 1 to 9.

22. A computer program product, wherein the computer program product is stored in a non-transitory storage medium, and when the computer program product is executed by a processor, the network-changing method according to any one of claims 1 to 9 is implemented.
